# EUROPEAN PATENT APPLICATION

(11) **EP 4 462 857 A1**
(43) Date of publication of application: **13.11.2024**
(21) Application number: 24164155.4
(22) Date of filing: 18.03.2024
(51) Int. Cl.: H04W 24/08

(54) **PRIORITY SETTING FOR MEASUREMENT GAP FOR COLLISION HANDLING**

(30) Priority: 12.05.2023 US 202363465907 P
(71) Applicant: Nokia Technologies Oy, 02610 Espoo (FI)
(72) Inventor: HOFMANN, Jürgen, 86504 Merching (DE); RYSGAARD, Bent Henneberg, 9220 Aalborg (DK); CAUDURO DIAS DE PAIVA, Rafael, 9200 Aalborg (DK)
(74) Representative: Bryers Intellectual Property Ltd

(57) **Abstract**

In accordance with example embodiments of the invention there is at least a method and apparatus to perform determining a pre-configured measurement gap configuration; and receiving, from a network node of a communication network, at least one priority level associated with a state of a pre-configured measurement gap. Further, to perform determining a pre-configured measurement gap configuration; determining at least one priority level associated with a state of a pre-configured measurement gap; and sending towards a network device of a communication network, information comprising the pre-configured measurement gap configuration and the at least one priority level.

## Description

### TECHNICAL FIELD:

The teachings in accordance with the exemplary embodiments of this invention relate generally to priority settings for measurement gaps.

### BACKGROUND:

As part of the work item NR_MG_enh2 in standards at the time of this application, there is discussed enhancements for UEs to be able to perform joint measurements using a configured combination of gap types (e.g., measurement gap, Pre-configured MG, Concurrent MG, NCSG and legacy gaps introduced in R15).

One problem discussed is regarding when a pre-configured measurement gap (pre-MG) is configured and associated measurements are changed from intra-/inter-frequency to within the active BWP, e.g., due to a network commanded BWP switch, thus the pre-configured measurement gap is considered de-activated. When this happens, the device will still do active BWP measurements. The pre-configured measurement gap may collide with another measurement gap, a concurrent measurement gap. However, it is unclear how to prioritize between a pre-MG in a certain state and another concurrent measurement gap as no state dependent measurement gap priority exists.

### SUMMARY:

This section contains examples of possible implementations and is not meant to be limiting.

In another example aspect of the invention, there is an apparatus, such as a user equipment side apparatus, comprising: at least one processor; and at least one non-transitory memory storing instructions, that when executed by the at least one processor, cause the apparatus at least to: determine a pre-configured measurement gap configuration; and receive, from a network node of a communication network, at least one priority level associated with a state of a pre-configured measurement gap.

In still another example aspect of the invention, there is a method, comprising: determining a pre-configured measurement gap configuration; and receiving, from a network node of a communication network, at least one priority level associated with a state of a pre-configured measurement gap.

A further example embodiment is an apparatus and a method comprising the apparatus and the method of the previous paragraphs.

A further example embodiment is an apparatus and a method comprising the apparatus and the method of the previous paragraphs, wherein there is when a pre-configured measurement gap collides with another measurement gap, determining whether to perform the pre-configured measurements associated with the pre-configured measurement gap or the measurements associated with the another measurement gap based at least in part on the received at least one priority level associated with the state of the pre-configured measurement gap, wherein the another measurement gap is associated with a priority and the determination, which measurements are to be performed, is based on a comparison between priority associated to the pre-configured measurement gap and priority associated to the another measurement gap, wherein the at least one priority level is received in a radio resource control message, wherein the at least one priority level is included in an information element containing parameters associated with the pre-configured measurement gap, wherein the determining is based on receiving the pre-configured measurement gap configuration from the network node of the communication network, wherein the pre-configured measurement gap configuration is received from the network node in a radio resource control reconfiguration message, wherein the state of the pre-configured measurement gap comprises one of active state or inactive state.

A non-transitory computer-readable medium storing program code, the program code executed by at least one processor to perform at least the method as described in the paragraphs above, wherein the another measurement gap is associated with a priority and the determination, which measurements are to be performed, is based on a comparison between priority associated to the pre-configured measurement gap and priority associated to the another measurement gap, wherein the at least one priority level is received in a radio resource control message, wherein the at least one priority level is included in an information element containing parameters associated with the pre-configured measurement gap, wherein the determining is based on receiving the pre-configured measurement gap configuration from the network node of the communication network, wherein the pre-configured measurement gap configuration is received from the network node in a radio resource control reconfiguration message, and/or wherein the state of the pre-configured measurement gap comprises one of active state or inactive state.

In yet another example aspect of the invention, there is an apparatus comprising: means for determining a pre-configured measurement gap configuration; and means for receiving, from a network node of a communication network, at least one priority level associated with a state of a pre-configured measurement gap.

In accordance with the example embodiments as described in the paragraph above, at least the means for determining and receiving comprises a network interface, and computer program code stored on a computer-readable medium and executed by at least one processor.

In another example aspect of the invention, there is an apparatus, such as a network side apparatus, comprising: at least one processor; and at least one non-transitory memory storing instructions, that when executed by the at least one processor, cause the apparatus at least to: determine a pre-configured measurement gap configuration; determine at least one priority level associated with a state of a pre-configured measurement gap; and send towards a network device of a communication network, information comprising the pre-configured measurement gap configuration and the at least one priority level.

In still another example aspect of the invention, there is a method, comprising: determining a pre-configured measurement gap configuration; determine at least one priority level associated with a state of a pre-configured measurement gap; and sending towards a network device of a communication network, information comprising the pre-configured measurement gap configuration and the at least one priority level. In an example, the at least one priority level can be sent in a radio resource control message.

A communication system comprising the network side apparatus and the user equipment side apparatus performing operations as described above.

### BRIEF DESCRIPTION OF THE DRAWINGS:

The above and other aspects, features, and benefits of various embodiments of the present disclosure will become more fully apparent from the following detailed description with reference to the accompanying drawings, in which like reference signs are used to designate like or equivalent elements. The drawings are illustrated for facilitating better understanding of the embodiments of the disclosure and are not necessarily drawn to scale, in which:
FIG. 1 shows a Pre-MG activation procedure;
FIG. 2 shows collisions of two simultaneous concurrent gaps in time configured for either RRM or PRS measurements;
FIG. 3 shows a Table 1: collision conditions;
FIG. 4 shows operations in accordance with example embodiments of the invention including adding a second priority to pre-MG configuration per state for when the measurement is considered in-active;
FIG. 5 shows an illustration of cancelling measurements when measurement gap occasions colliding;
FIG. 6 shows a high-level block diagram of various devices used in carrying out various aspects of the example embodiments of the invention; and
FIG. 7A and FIG. 7B each show a method in accordance with example embodiments of the invention which may be performed by an apparatus.

### DETAILED DESCRIPTION:

Certain abbreviations that may be found in the description and/or in the Figures are herewith defined as follows:
- BWP: bandwidth part
- MG: measurement gap
- MO: measurement occasion
- NCSG: network controlled small gap
- NR: new radio
- PRS: positioning reference signal
- RAN: random access network
- RRM: radio resource management
- SSB: synchronization signal block
- UE: user equipment

In example embodiments of this invention there is proposed at least a method and apparatus for a new method of prioritizing between a pre-MG in a certain state and another concurrent measurement including adding priority to de-activated pre-MG occasions.

A measurement gap configuration can include: measurement gap repetition period (MGRP), gap offset, measurement gap length (MGL), measurement gap timing advance (MGTA), and/or a reference serving cell indicator.

It is noted that measurements done by both UE and the network are essential to operations of any cellular system. The UE and the network use measurements to make decisions at least to manage resources and quality of service.

Further measurements that can be applicable to example embodiments of the invention can include any types of UE or network measurements including intra-frequency, inter-frequency, inter-system, traffic volume, quality and UE internal measurements. Further, example embodiments of the invention can be applicable to observed time difference, observed time difference to a cell, reception timing deviation, received signal code power (RSCP), and/or interference signal code power (ISCP) measurements.

The following objective 1 is defined by RAN4:

### Enhancements of pre-configured MGs, multiple concurrent MGs and NCSG:

- Define RRM requirements for UEs configured with a combination of pre-configured MGs, and/or concurrent MGs and/or NCSG [RAN4],
   - Prioritize at least joint requirements for UE configured with:
      - Case 1: Pre-configured MG(s) and concurrent MG(s) (i.e., the network has provided UE with multiple measurement gap patterns where at least one gap pattern is a Pre-configured MG),
      - Case 2: NCSG and concurrent MG(s) (i.e., the network has provided UE with multiple measurement gap patterns where at least one gap pattern is a NCSG);
- Note 1: Gaps that are configured for NTN are precluded in this WI;
- Note 2: The scenarios that NCSG is considered in Case 1 and that Pre-configured MG is considered in Case 2 are precluded in this WI;
- Note 3: Prioritization among other possible combinations of pre-configured MG, concurrent MG and NCSG can be discussed after RAN#100;
- Note 4: This WID does not include any inter-working with MUSIM gaps Among these combinations, RAN4 has prioritized following four gap type combinations for specifying RRM requirements in the NR_MG_enh2 work item:
   1) Case 1 requirements:
      a) Pre-MG + Concurrent MG,
      b) Pre-MG + Pre-MG;
   2) Case 2 requirements:
      a) NCSG + Concurrent MG,
      b) NCSG + NCSG

Example embodiments of the invention can refer to Case 1 requirements, i.e., combinations 1a) and 1b). However, it is noted that the example embodiments of the invention are not limited to this Case 1 requirement. Rather, the example embodiments of the invention can be applied to any measurement configuration requirements in LTE, 5G, or 6G technologies.

In Rel-17, the gap types of Pre-MG, Concurrent MG and NCSG were introduced.

Pre-MG depicts a pre-configured MG that can be activated/deactivated after configuration.

Concurrent MG is configured with an association (for example used for RRM or PRS measurements and with a gap priority in order to resolve collisions (i.e., overlapping in time domain) with another concurrent gap, in that the gap with lower gap priority is dropped.

The advantage of NCSG compared to MG is the lower interruption time for scheduling data on uplink or downlink on the serving carrier by using a vacant receiver chain for neighbor cell measurements, in that the interruption time is limited to the RF retuning windows, whilst no interruption applies for the measurement window (ML).

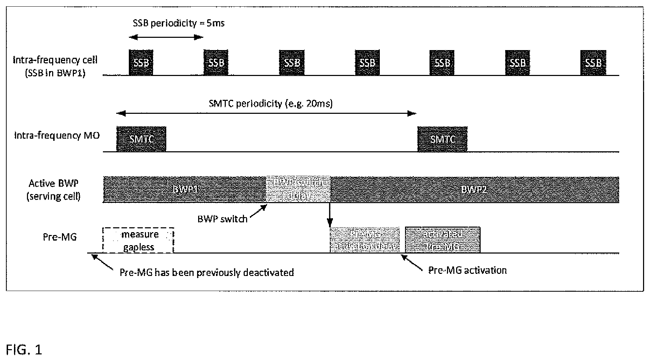

FIG. 1A shows a Pre-MG activation procedure.

For Pre-MG, FIG. 1 depicts the Pre-MG activation procedure applied for intra-frequency measurements.

In case intra-frequency MO is within active BWP of serving cell, e.g., in BWP1 as depicted, SSB measurements are done gapless and Pre-MG is deactivated, once the operation in BWP1 starts. When the network commands a BWP switch to BWP2, and intra-frequency MO is not fully covered by BWP2, then Pre-MG needs to be activated to measure that intra-frequency MO. Thus, depending on whether active BWP fully covers the intra-frequency MO, Pre-MG is either deactivated, else activated.

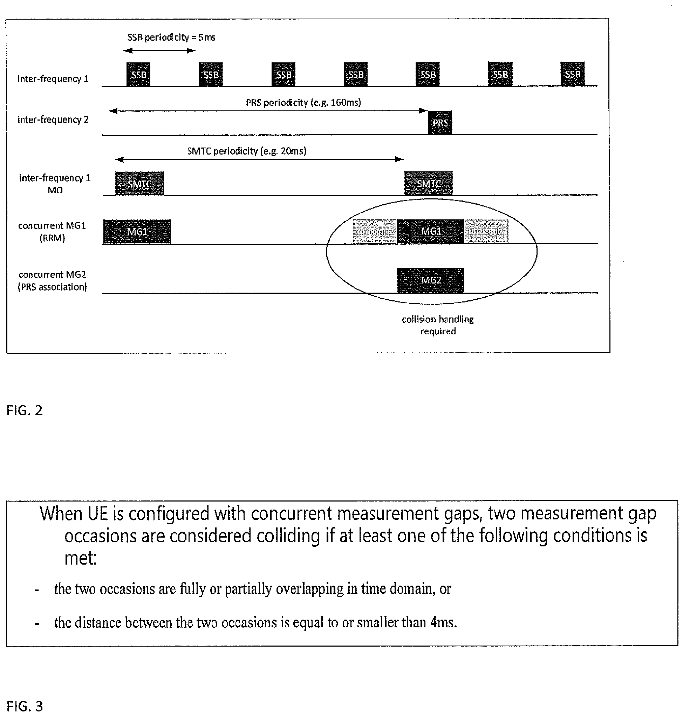

For concurrent MG, Rel-17 has specified requirements if two concurrent MGs are partially or fully overlapping as depicted in FIG. 2.

FIG. 2 shows collisions of two simultaneous concurrent gaps in time configured for either RRM or PRS measurements.

For instance, if one of the concurrent gaps is configured for inter-frequency RRM MOs and the other for inter-frequency PRS measurements, then partial or full overlapping of reference signals (e.g., SSB and PRS) may occur and hence may result in partial or full overlapping of both concurrent gaps in time domain. In this case RAN4 has defined the collision condition as shown in FIG. 3, i.e. if both gaps overlap taking into account a proximity window of 4ms prior and after one of the gaps, then this yields a collision of both gaps as depicted in FIG. 2. In this case, only one MG can be supported by the UE and hence the MG which is assigned the higher gap priority level is selected, the other being dropped. For instance, MG2 as in FIG. 2 is used for PRS measurement is assigned a higher gap priority than MG1, and is used for inter-frequency RRM MOs, then MG1 is dropped in case of collision. If such overlapping steadily happens, MG1 will always be dropped. And vice versa in case of reversed gap priorities.

FIG. 3 shows a Table 1: collision conditions. As shown in FIG. 3 when the UE is configured with concurrent measurement gaps, two measurement gap occasions are considered colliding if at least one of the conditions is met. For example, as shown in FIG. 3 the two occasions are fully or partially overlapping in a time domain, or the distance between the two occasions is equal to or smaller than 4ms.

In Rel-18, Case 1 requirements are related to concurrent configuration of Pre-MG and concurrent MG or two Pre-MGs. The example embodiments of the present invention are related to collision handling for the Case 1 scenario, where one of the measurement gaps is a Pre-MG.

The Rel-17 specification TS 38.133 considers collisions of concurrent gaps. The gaps are configured like legacy measurement gaps cannot be activated or deactivated during the time they are being configured. A concurrent gap is assigned a gap priority which is used in case of gap collision, i.e., in case of partial or full overlapping with another MG, taking into account the proximity intervals, as depicted in FIG. 2, the concurrent MG with the lower gap priority is dropped.

For Rel-18, 3GPP RAN4 is discussing whether and how to specify the collision handling for Case 1 requirements.

Agreement has been achieved to apply the Rel-17 priority-based collision handling for the collision scenario of an activated Pre-MG and a concurrent gap, assuming that the Pre-MG is assigned a gap priority attribute. With other words, as for the case of two concurrent gaps, for this case the gap with the configured higher gap priority will be selected and the other gap dropped.

More flexibility and thus better network control on collision handling for the case of deactivated Pre-MG will therefore be beneficial.

As described herein, a deactivated pre-MG can be active on the serving cell, in the active BWP, but only appear as active if acting inter-BWP. In case such a "de-activated" pre-MG is conflicting with another measurement, there must be a clear priority between the potentially overlapping measurements.

It is noted that there are gap types of de-activated pre-MG, active pre-MG, concurrent MG, and Network Controlled Small Gap (NCSG). A focus in accordance with the example embodiments is the de-activated pre-MG.

Further, as stated above one problem is that when a pre-configured measurement gap, pre-MG, is changed from intra-/inter-frequency to within the active BWP, it is considered de-activated. When this happens, the device will still do active BWP measurements. During such a measurement, the measurement may collide with another measurement, a concurrent measurement. For concurrent measurements, there is a clear priority. However, as indicated in the Way Forward document from the latest RAN4 meeting, it is unclear how to prioritize between a deactivated pre-MG and another concurrent measurement as no such priority exists.

When considering the above, one problem is, how shall the UE behave if a deactivated pre-MG is concurrent to any other measurement type.

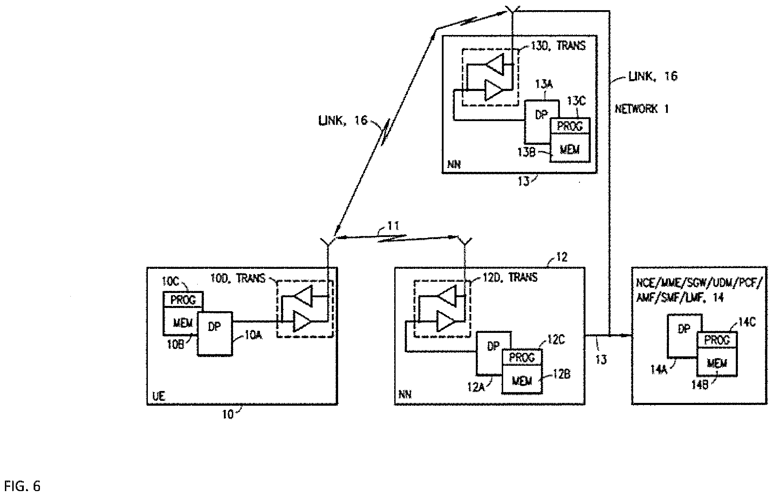

Before describing the example embodiments as disclosed herein in detail, reference is made to FIG. 6 for illustrating a simplified block diagram of various electronic devices that are suitable for use in practicing the example embodiments of this invention.

FIG. 6 shows a block diagram of one possible and non-limiting exemplary system in which the example embodiments may be practiced. In FIG. 6, a user equipment (UE) 10 is in wireless communication with a wireless network 1 or network, 1 as in FIG. 6. The wireless network 1 or network 1 as in FIG. 6 can comprise a communication network such as a mobile network e.g., the mobile network 1 or first mobile network as disclosed herein. Any reference herein to a wireless network 1 as in FIG. 6 can be seen as a reference to any wireless network as disclosed herein. Further, the wireless network 1 as in FIG. 6 can also comprise hardwired features as may be required by a communication network. A UE is a wireless, typically mobile device that can access a wireless network. The UE, for example, may be a mobile phone (or called a "cellular" phone) and/or a computer with a mobile terminal function. For example, the UE or mobile terminal may also be a portable, pocket, handheld, computer-embedded or vehicle-mounted mobile device and performs a language signaling and/or data exchange with the RAN.

The UE 10 includes one or more processors DP 10A, one or more memories MEM 10B, and one or more transceivers TRANS 10D interconnected through one or more buses. Each of the one or more transceivers TRANS 10D includes a receiver and a transmitter. The one or more buses may be address, data, or control buses, and may include any interconnection mechanism, such as a series of lines on a motherboard or integrated circuit, fiber optics or other optical communication equipment, and the like. The one or more transceivers TRANS 10D which can be optionally connected to one or more antennas for communication to NN 12 and NN 13, respectively. The one or more memories MEM 10B include computer program code PROG 10C. The UE 10 communicates with NN 12 and/or NN 13 via a wireless link 11 or 16.

The NN 12 (NR/5G Node B, an evolved NB, or LTE device) is a network node such as a master or secondary node base station (e.g., for NR or LTE long term evolution) that communicates with devices such as NN 13 and UE 10 of FIG. 6. The NN 12 provides access to wireless devices such as the UE 10 to the wireless network 1. The NN 12 includes one or more processors DP 12A, one or more memories MEM 12B, and one or more transceivers TRANS 12D interconnected through one or more buses. In accordance with the example embodiments these TRANS 12D can include X2 and/or Xn interfaces for use to perform the example embodiments. Each of the one or more transceivers TRANS 12D includes a receiver and a transmitter. The one or more transceivers TRANS 12D can be optionally connected to one or more antennas for communication over at least link 11 with the UE 10. The one or more memories MEM 12B and the computer program code PROG 12C are configured to cause, with the one or more processors DP 12A, the NN 12 to perform one or more of the operations as described herein. The NN 12 may communicate with another gNB or eNB, or a device such as the NN 13 such as via link 16. Further, the link 11, link 16 and/or any other link may be wired or wireless or both and may implement, e.g., an X2 or Xn interface. Further the link 11 and/or link 16 may be through other network devices such as, but not limited to an NCE/MME/SGW/UDM/PCF/AMF/SMF/LMF 14 device as in FIG. 6. The NN 12 may perform functionalities of an MME (Mobility Management Entity) or SGW (Serving Gateway), such as a User Plane Functionality, and/or an Access Management functionality for LTE and similar functionality for 5G.

The NN 13 can be for WiFi or Bluetooth or other wireless device associated with a mobility function device such as an AMF or SMF, further the NN 13 may comprise a NR/5G Node B or possibly an evolved NB a base station such as a master or secondary node base station (e.g., for NR or LTE long term evolution) that communicates with devices such as the NN 12 and/or UE 10 and/or the wireless network 1. The NN 13 includes one or more processors DP 13A, one or more memories MEM 13B, one or more network interfaces, and one or more transceivers TRANS 13D interconnected through one or more buses. In accordance with the example embodiments these network interfaces of NN 13 can include X2 and/or Xn interfaces for use to perform the example embodiments. Each of the one or more transceivers TRANS 13D includes a receiver and a transmitter that can optionally be connected to one or more antennas. The one or more memories MEM 13B include computer program code PROG 13C. For instance, the one or more memories MEM 13B and the computer program code PROG 13C are configured to cause, with the one or more processors DP 13A, the NN 13 to perform one or more of the operations as described herein. The NN 13 may communicate with another mobility function device and/or eNB such as the NN 12 and the UE 10 or any other device using, e.g., link 11 or link 16 or another link. The Link 16 as shown in FIG. 6 can be used for communication with the NN12. These links maybe wired or wireless or both and may implement, e.g., an X2 or Xn interface. Further, as stated above the link 11 and/or link 16 may be through other network devices such as, but not limited to an NCE/MME/SGW device such as the NCE/MME/SGW/UDM/PCF/AMF/SMF/LMF 14 of FIG. 6.

The one or more buses of the device of FIG. 6 may be address, data, or control buses, and may include any interconnection mechanism, such as a series of lines on a motherboard or integrated circuit, fiber optics or other optical communication equipment, wireless channels, and the like. For example, the one or more transceivers TRANS 12D, TRANS 13D and/or TRANS 10D may be implemented as a remote radio head (RRH), with the other elements of the NN 12 being physically in a different location from the RRH, and these devices can include one or more buses that could be implemented in part as fiber optic cable to connect the other elements of the NN 12 to an RRH.

It is noted that although FIG. 6 shows network nodes such as NN 12 and NN 13, any of these nodes may can incorporate or be incorporated into an eNodeB or eNB or gNB such as for LTE and NR and would still be configurable to perform example embodiments.

Also, it is noted that description herein indicates that "cells" perform functions, but it should be clear that the gNB that forms the cell and/or a user equipment and/or mobility management function device can perform the functions. In addition, the cell makes up part of a gNB, and there can be multiple cells per gNB.

The wireless network 1 or any network it can represent may or may not include a NCE/MME/SGW/UDM/PCF/AMF/SMF/LMF 14 that may include (NCE) network control element functionality, MME (Mobility Management Entity)/SGW (Serving Gateway) functionality, and/or serving gateway (SGW), and/or MME (Mobility Management Entity) and/or SGW (Serving Gateway) functionality, and/or user data management functionality (UDM), and/or PCF (Policy Control) functionality, and/or Access and Mobility Management Function (AMF) functionality, and/or Session Management (SMF) functionality, and/or Location Management Function (LMF), and/or Authentication Server (AUSF) functionality and which provides connectivity with a further network, such as a telephone network and/or a data communications network (e.g., the Internet), and which is configured to perform any 5G and/or NR operations in addition to or instead of other standard operations at the time of this application. The NCE/MME/SGW/UDM/PCF/AMF/SMF/LMF 14 is configurable to perform operations in accordance with example embodiments in any of an LTE, NR, 5G and/or any standards-based communication technologies being performed or discussed at the time of this application. In addition, it is noted that the operations in accordance with example embodiments, as performed by the NN 12 and/or NN 13, may also be performed at the NCE/MME/SGW/LTDM/PCF/AMF/SMF/LMF 14.

The NCE/MME/SGW/UDM/PCF/AMF/SMF/LMF 14 includes one or more processors DP 14A, one or more memories MEM 14B, and one or more network interfaces (N/W I/F(s)), interconnected through one or more buses coupled with the link 13 and/or link 16. In accordance with the example embodiments these network interfaces can include X2 and/or Xn interfaces for use to perform the example embodiments. The one or more memories MEM 14B include computer program code PROG 14C. The one or more memories MEM14B and the computer program code PROG 14C are configured to, with the one or more processors DP 14A, cause the NCE/MME/SGW/UDM/PCF/AMF/SMF/LMF 14 to perform one or more operations which may be needed to support the operations in accordance with the example embodiments.

It is noted that that the NN 12 and/or NN 13 and/or UE 10 can be configured (e.g., based on standards implementations etc.) to perform functionality of a Location Management Function (LMF). The LMF functionality may be embodied in any of these network devices or other devices associated with these devices. In addition, an LMF such as the LMF of the MME/SGW/UDM/PCF/AMF/SMF/LMF 14 of FIG. 6, as at least described below, can be co-located with UE 10 such as to be separate from the NN 12 and/or NN 13 of FIG. 6 for performing operations in accordance with example embodiments as disclosed herein.

The wireless Network 1 may implement network virtualization, which is the process of combining hardware and software network resources and network functionality into a single, software-based administrative entity, a virtual network. Network virtualization involves platform virtualization, often combined with resource virtualization. Network virtualization is categorized as either external, combining many networks, or parts of networks, into a virtual unit, or internal, providing network-like functionality to software containers on a single system. Note that the virtualized entities that result from the network virtualization are still implemented, at some level, using hardware such as processors DP10, DP12A, DP13A, and/or DP14A and memories MEM 10B, MEM 12B, MEM 13B, and/or MEM 14B, and also such virtualized entities create technical effects.

The computer readable memories MEM 12B, MEM 13B, and MEM 14B may be of any type suitable to the local technical environment and may be implemented using any suitable data storage technology, such as semiconductor based memory devices, flash memory, magnetic memory devices and systems, optical memory devices and systems, fixed memory and removable memory. The computer readable memories MEM 12B, MEM 13B, and MEM 14B may be means for performing storage functions. The processors DP10, DP12A, DP13A, and DP14A may be of any type suitable to the local technical environment, and may include one or more of general-purpose computers, special purpose computers, microprocessors, digital signal processors (DSPs) and processors based on a multi-core processor architecture, as non-limiting examples. The processors DP10, DP12A, DP13A, and DP14A may be means for performing functions, such as controlling the UE 10, NN 12, NN 13, and other functions as described herein.

In general, various embodiments of any of these devices can include, but are not limited to, cellular telephones such as smart phones, tablets, personal digital assistants (PDAs) having wireless communication capabilities, portable computers having wireless communication capabilities, image capture devices such as digital cameras having wireless communication capabilities, gaming devices having wireless communication capabilities, music storage and playback appliances having wireless communication capabilities, Internet appliances permitting wireless Internet access and browsing, tablets with wireless communication capabilities, as well as portable units or terminals that incorporate combinations of such functions.

Further, the various embodiments of any of these devices can be used with a UE vehicle, a High Altitude Platform Station, or any other such type node associated with a terrestrial network or any drone type radio or a radio in aircraft or other airborne vehicle or a vessel that travels on water such as a boat.

As similarly stated above, when considering the above, one problem is, how shall the UE behave if a deactivated pre-MG is concurrent to any other measurement type.

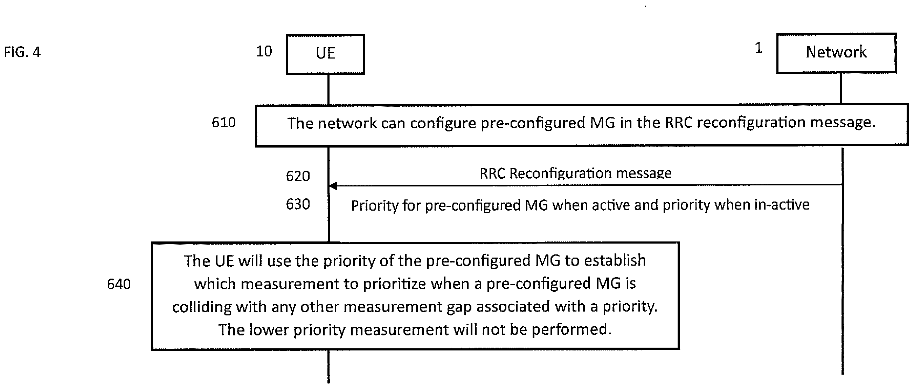

In example embodiments of this invention, there is proposed to add priority to deactivated pre-MG gap occasions. In standards at the time of this application the legacy priority for a measurement is already given and shall in this case apply to active pre-MG measurements. A new priority is added to give a separate priority to the measurement when it is inactive, see FIG. 4.

FIG. 4 shows operations in accordance with example embodiments of the invention including adding a second priority to pre-MG configuration for when the measurement is considered in-active. As shown in FIG. 4 there is communication between a UE 10 and a Network 1. As shown in block 610 of FIG. 4 the network 1 can determine and configure pre-MG in an RRC reconfiguration message. As shown in block 620 of FIG. 4 the network 1 sends towards the UE 10 the RRC reconfiguration message. As shown in block 630 of FIG. 4 the priority for the pre-MG is based on an active priority state or an in-active priority state of measurements. Then as shown in block 640 of FIG. 4 the UE will use the priority of the pre-configured MG to establish which measurement to prioritize when a pre-configured MG is colliding with any other measurement gap associated with a priority. The lower priority measurement will not be performed.

There are already rules today in TS 38.133 when a measurement is active vs inactive, and the example embodiments of the invention suggest that the UE itself changes priority based on the state of the measurement as configured by the network.

This will allow the UE and network to place the right priority to measurements even though conditions have changed without the need for a measurement reconfiguration.

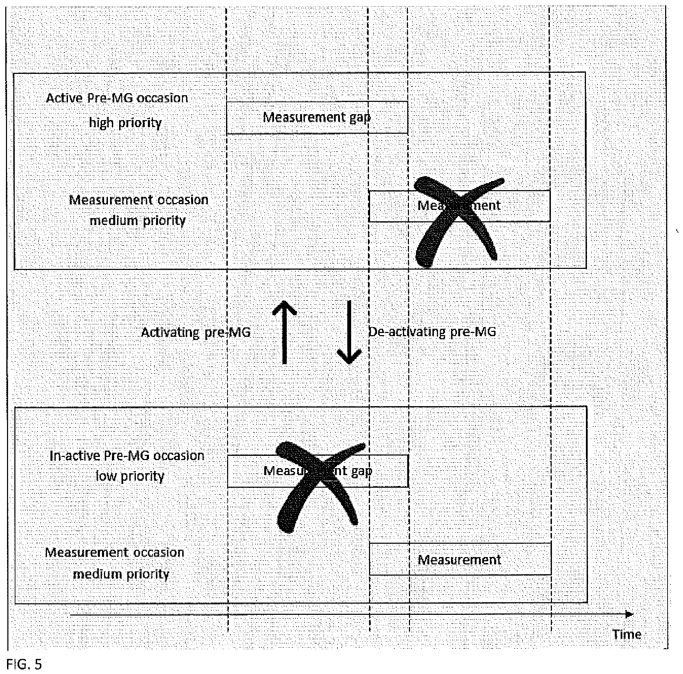

The result of prioritizing with separate priority levels for active vs in-active pre-MG measurements is illustrated in FIG. 5. In this example, the pre-MG gap occasion has a high priority when active and low priority when in-active, relative to the conflicting measurement gap occasions.

As shown in FIG. 5 there is activating pre-MG where the measurement gap is to be based on the active pre-MG gap occasion has a high priority, and where the measurement is not performed based on the measurement gap occasion with medium priority. Further, in FIG. 5 there is de-activating pre-MG where the in-active pre-MG occasion has a low priority such that the pre-MG occasion is not performed, and where the measure gap occasion is performed based on the measurement gap occasion having a medium priority.

It should be noted that there are no restrictions to what priority the network can assign within the range of the GapPriority parameter. Today, there are 16 priority values. With more priorities per measurement, this can be extended.

The MeasGapConfig could potentially also be extended with a GapConfig-r18.

Another option is to add a nonCtiricalExtension for RRCReconfiguration-v1800-IEs, defining an IE linking a secondary priority to a measGapId explicitly.

It shall be noted that it is an option to add a UE capability to identify the ability to handle 2 priorities for pre-MG configurations, one for active and one for inactive. In this way, the NW will only include the second priority if the UE supports it. It is also possible that the element is mandatory for any device claiming r18 support.

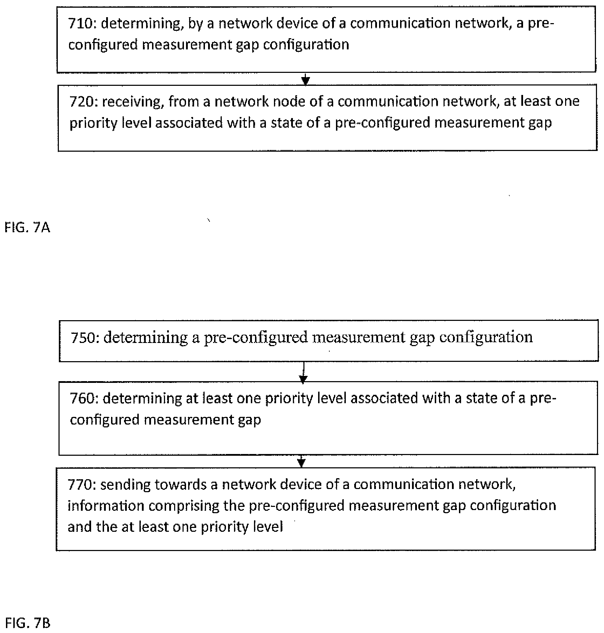

FIG. 7A and FIG. 7B each show a method in accordance with example embodiments of the invention which may be performed by an apparatus.

FIG. 7A illustrates operations which may be performed by a device such as, but not limited to, a device such as a network device (e.g., the UE 10 as in FIG. 6). As shown in block 710 of FIG. 7A there is determining, by a network device of a communication network, a pre-configured measurement gap configuration. As shown in block 720 of FIG. 7A there is receiving, from a network node of a communication network, at least one priority level associated with a state of a pre-configured measurement.

In accordance with the example embodiments as described in the paragraph above, when a pre-configured measurement collides with another measurement, determine whether to perform the pre-configured measurement or the another measurement based at least in part on the received at least one priority level associated with the state of the pre-configured measurement.

In accordance with the example embodiments as described in the paragraphs above, wherein the another measurement gap is associated with a priority and the determination, which measurements are to be performed, is based on a comparison between priority associated to the pre-configured measurement gap and priority associated to the another measurement gap.

In accordance with the example embodiments as described in the paragraphs above, wherein the at least one priority level is received in a radio resource control message.

In accordance with the example embodiments as described in the paragraphs above, wherein the at least one priority level is included in an information element containing parameters associated with a pre-configured measurement gap.

In accordance with the example embodiments as described in the paragraphs above, wherein the determining is based on receiving the pre-configured measurement gap configuration from the network node of the communication network. In accordance with the example embodiments as described in the paragraphs above, the pre-configured measurement gap configuration is received from the network node in a radio resource control reconfiguration message.

In accordance with the example embodiments as described in the paragraphs above, wherein the state of the pre-configured measurement gap comprises one of active state or inactive state.

A non-transitory computer-readable medium (MEM 10B as in FIG. 6) storing program code (PROG 10C of as in FIG. 6), the program code executed by at least one processor (DP 10A as in FIG. 6) to perform the operations as at least described in the paragraphs above.

In accordance with an example embodiment of the invention as described above there is an apparatus comprising: means for determining (one or more transceivers 10D; MEM 10B; PROG 10C; and DP 10A as in FIG. 6), by a network device (UE 10 as in FIG. 6) of a communication network (Network 1 as in FIG. 6), a pre-configured measurement gap configuration; means for receiving (one or more transceivers 10D; MEM 10B; PROG 10C; and DP 10A as in FIG. 6), from a network node (NN 12 and/or NN 13 as in FIG. 6) of a communication network (Network 1 as in FIG. 6), at least one priority level associated with a state of a pre-configured measurement.

In the example aspect of the invention according to the paragraph above, wherein at least the means for determining and receiving comprises a non-transitory computer readable medium [MEM 10B as in FIG. 6] encoded with a computer program [PROG 10C as in FIG. 6] executable by at least one processor [DP 10A as in FIG. 6].

FIG. 7B illustrates operations which may be performed by a device such as, but not limited to, a device such as network node (e.g., the NN 12 and/or NN 13 as in FIG. 6). As shown in block 750 of FIG. 7B there is determined a pre-configured measurement gap configuration. As shown in block 760 of FIG. 7B there is determining at least one priority level associated with a state of a pre-configured measurement gap. Then as shown in block 770 of FIG. 7B there is sending towards a network device of a communication network, information comprising the pre-configured measurement gap configuration and the at least one priority level.

In accordance with the example embodiments as described in the paragraph above, wherein the at least one priority level is sent in a radio resource control message.

In accordance with the example embodiments as described in the paragraphs above, wherein the at least one priority level is containing parameters associated with a pre-configured measurement gap.

In accordance with the example embodiments as described in the paragraphs above, wherein the pre-configured measurement gap configuration is sent towards the network device in a radio resource control reconfiguration message.

In accordance with the example embodiments as described in the paragraphs above, wherein the state of the pre-configured measurement comprises one of active state or inactive state.

A non-transitory computer-readable medium (MEM 12B and/or MEM 13B as in FIG. 6) storing program code (PROG 12C and/or PROG 13C as in FIG. 6), the program code executed by at least one processor (DP 12A and/or DP 13A as in FIG. 6) to perform the operations as at least described in the paragraphs above.

In accordance with an example embodiment of the invention as described above there is an apparatus comprising: means for determining (TRANS 12D and/or TRANS 13D; MEM 12B and/or MEM 13B, PROG 12C and/or PROG 13C, and DP 12A and/or DP 13A as in FIG. 6) a pre-configured measurement gap configuration; means for determining (TRANS 12D and/or TRANS 13D; MEM 12B and/or MEM 13B, PROG 12C and/or PROG 13C, and DP 12A and/or DP 13A as in FIG. 6) at least one priority level associated with a state of a pre-configured measurement; and means for sending (TRANS 12D and/or TRANS 13D; MEM 12B and/or MEM 13B, PROG 12C and/or PROG 13C, and DP 12A and/or DP 13A as in FIG. 6) towards a network device (NN 12 and/or NN 13 as in FIG. 6) of a communication network (Network 1 as in FIG. 6), information comprising the pre-configured measurement gap configuration and the at least one priority level

In the example aspect of the invention according to the paragraph above, wherein at least the means for determining and sending comprises a non-transitory computer readable medium [MEM 12B and/or MEM 13B as in FIG. 6] encoded with a computer program [PROG 12C and/or PROG 13C as in FIG. 6] executable by at least one processor [DP 12A and/or DP 13A as in FIG. 6].

Further, in accordance with example embodiments of the invention there is circuitry for performing operations in accordance with example embodiments of the invention as disclosed herein. This circuitry can include any type of circuitry including content coding circuitry, content decoding circuitry, processing circuitry, image generation circuitry, data analysis circuitry, etc.). Further, this circuitry can include discrete circuitry, application-specific integrated circuitry (ASIC), and/or field-programmable gate array circuitry (FPGA), etc. as well as a processor specifically configured by software to perform the respective function, or dual-core processors with software and corresponding digital signal processors, etc.). Additionally, there are provided necessary inputs to and outputs from the circuitry, the function performed by the circuitry and the interconnection (perhaps via the inputs and outputs) of the circuitry with other components that may include other circuitry in order to perform example embodiments of the invention as described herein.

In accordance with example embodiments of the invention as disclosed in this application this application, the "circuitry" provided can include at least one or more or all of the following:
(a) hardware-only circuit implementations (such as implementations in only analog and/or digital circuitry);
(b) combinations of hardware circuits and software, such as (as applicable):
   (i) a combination of analog and/or digital hardware circuit(s) with software/firmware; and
   (ii) any portions of hardware processor(s) with software (including digital signal processor(s)), software, and memory(ies) that work together to cause an apparatus, such as a mobile phone or server, to perform various functions, such as functions or operations in accordance with example embodiments of the invention as disclosed herein); and
(c) hardware circuit(s) and or processor(s), such as a microprocessor(s) or a portion of a microprocessor(s), that requires software (e.g., firmware) for operation, but the software may not be present when it is not needed for operation."

In accordance with example embodiments of the invention, there is adequate circuitry for performing at least novel operations in accordance with example embodiments of the invention as disclosed in this application, this ' circuitry" as may be used herein refers to at least the following:
(a) hardware-only circuit implementations (such as implementations in only analog and/or digital circuitry); and
(b) to combinations of circuits and software (and/or firmware), such as (as applicable): (i) to a combination of processor(s) or (ii) to portions of processor(s)/software (including digital signal processor(s)), software, and memory(ies) that work together to cause an apparatus, such as a mobile phone or server, to perform various functions); and
(c) to circuits, such as a microprocessor(s) or a portion of a microprocessor(s), that require software or firmware for operation, even if the software or firmware is not physically present.

This definition of 'circuitry' applies to all uses of this term in this application, including in any claims. As a further example, as used in this application, the term "circuitry" would also cover an implementation of merely a processor (or multiple processors) or portion of a processor and its (or their) accompanying software and/or firmware. The term "circuitry" would also cover, for example and if applicable to the particular claim element, a baseband integrated circuit or applications processor integrated circuit for a mobile phone or a similar integrated circuit in a server, a cellular network device, or other network device.

In general, the various embodiments may be implemented in hardware or special purpose circuits, software, logic or any combination thereof. For example, some aspects may be implemented in hardware, while other aspects may be implemented in firmware or software which may be executed by a controller, microprocessor or other computing device, although the invention is not limited thereto. While various aspects of the invention may be illustrated and described as block diagrams, flow charts, or using some other pictorial representation, it is well understood that these blocks, apparatus, systems, techniques or methods described herein may be implemented in, as non-limiting examples, hardware, software, firmware, special purpose circuits or logic, general purpose hardware or controller or other computing devices, or some combination thereof.

Embodiments of the inventions may be practiced in various components such as integrated circuit modules. The design of integrated circuits is by and large a highly automated process. Complex and powerful software tools are available for converting a logic level design into a semiconductor circuit design ready to be etched and formed on a semiconductor substrate.

The word "exemplary" is used herein to mean "serving as an example, instance, or illustration." Any embodiment described herein as "exemplary" is not necessarily to be construed as preferred or advantageous over other embodiments. All of the embodiments described in this Detailed Description are exemplary embodiments provided to enable persons skilled in the art to make or use the invention and not to limit the scope of the invention which is defined by the claims.

The foregoing description has provided by way of exemplary and non-limiting examples a full and informative description of the best method and apparatus presently contemplated by the inventors for carrying out the invention. However, various modifications and adaptations may become apparent to those skilled in the relevant arts in view of the foregoing description, when read in conjunction with the accompanying drawings and the appended claims. However, all such and similar modifications of the teachings of example embodiments of this invention will still fall within the scope of this invention.

It should be noted that the terms "connected," "coupled," or any variant thereof, mean any connection or coupling, either direct or indirect, between two or more elements, and may encompass the presence of one or more intermediate elements between two elements that are "connected" or "coupled" together. The coupling or connection between the elements can be physical, logical, or a combination thereof. As employed herein two elements may be considered to be "connected" or "coupled" together by the use of one or more wires, cables and/or printed electrical connections, as well as by the use of electromagnetic energy, such as electromagnetic energy having wavelengths in the radio frequency region, the microwave region and the optical (both visible and invisible) region, as several non-limiting and non-exhaustive examples.

Furthermore, some of the features of the preferred embodiments of this invention could be used to advantage without the corresponding use of other features. As such, the foregoing description should be considered as merely illustrative of the principles of the invention, and not in limitation thereof.

## Claims

1. An apparatus, comprising:
at least one processor; and
at least one non-transitory memory storing instructions, that when executed by the at least one processor, cause the apparatus at least to:
determine a pre-configured measurement gap configuration; and
receive, from a network node of a communication network, at least one priority level associated with a state of a pre-configured measurement gap.

2. The apparatus of claim 1, at least one non-transitory memory storing instructions, that when executed by the at least one processor, cause the apparatus at least to:
when a pre-configured measurement gap collides with another measurement gap, determine whether to perform the measurements associated with the pre-configured measurement gap or the measurements associated with the another measurement gap based at least in part on the received at least one priority level associated with the state of the pre-configured measurement gap.

3. The apparatus according to any one of claims 1 or 2, wherein the another measurement gap is associated with a priority and the determination, which measurements are to be performed, is based on a comparison between priority associated to the pre-configured measurement gap and priority associated to the another measurement gap.

4. The apparatus according to any one of claims 1, 2 or 3, wherein the at least one priority level is received in a radio resource control message.

5. The apparatus of claim 1, wherein the at least one priority level is included in an information element containing parameters associated with the pre-configured measurement gap.

6. The apparatus of claim 1, wherein the determining is based on receiving the pre-configured measurement gap configuration from the network node of the communication network.

7. The apparatus of claim 6, wherein the pre-configured measurement gap configuration is received from the network node in a radio resource control reconfiguration message.

8. The apparatus of claim 1, wherein the state of the pre-configured measurement gap comprises one of active state or inactive state.

9. An apparatus, comprising:
at least one processor; and
at least one non-transitory memory storing instructions, that when executed by the at least one processor, cause the apparatus at least to:
determine a pre-configured measurement gap configuration;
determine at least one priority level associated with a state of a pre-configured measurement gap; and
send towards a network device of a communication network, information comprising the pre-configured measurement gap configuration and the at least one priority level.

10. The apparatus of claim 9, wherein the at least one priority level is sent in a radio resource control message.

11. The apparatus of claim 10, wherein the at least one priority level is included in an information element containing parameters associated with the pre-configured measurement gap.

12. The apparatus of claim 9, wherein the pre-configured measurement gap configuration is sent towards the network device in a radio resource control reconfiguration message.

13. The apparatus according to any one of claims 9-12, wherein the state of the pre-configured measurement gap comprises one of active state or inactive state.

14. A method, comprising:
determining a pre-configured measurement gap configuration;
determining at least one priority level associated with a state of a pre-configured measurement gap; and
sending, towards a network device of a communication network, information comprising the pre-configured measurement gap configuration and the at least one priority level.

15. The method of claim 14, wherein the at least one priority level is sent in a radio resource control message.
